# EUROPÄISCHE PATENTSCHRIFT

(11) **EP 1 042 175 B1**
(45) Veröffentlichungstag und Bekanntmachung des Hinweises auf die Patenterteilung: **22.10.2003**
(21) Anmeldenummer: 99945926.6
(22) Anmeldetag: 06.07.1999
(51) Int. Cl.: B65D 1/00

(54) **VERFAHREN UND VORRICHTUNG ZUM MOBILEN HERSTELLEN VON DICHTUNGEN AN DER BEDARFSSTELLE**
METHOD AND DEVICE FOR MOBILE ON THE SPOT PRODUCTION OF SEALING ELEMENTS
PROCEDE ET DISPOSITIF DE REALISATION MOBILE DE GARNITURES D'ETANCHEITE AU POINT D'UTILISATION

(30) Priorität: 07.07.1998 DE 19830226
(43) Veröffentlichungstag der Anmeldung: 11.10.2000
(73) Patentinhaber: Thoma, Norbert, 90584 Allersberg (DE)
(72) Erfinder: Thoma, Norbert, 90584 Allersberg (DE)
(74) Vertreter: Wasmeier, Alfons, Dipl.-Ing.
(86) Internationale Anmeldenummer: DE9902088
(87) Internationale Veröffentlichungsnummer: WO00001214

(56) Entgegenhaltungen:
- WO-A-98/04434
- DE-U- 29 801 732
- US-A- 4 362 329
- US-A- 4 643 476

## Beschreibung

Die Erfindung betrifft ein Verfahren und eine Vorrichtung zum Bereitstellen von maschinell und individuell hergestellten Dichtungen.

Aus DBGM 298 01 732 ist ein Service-Fahrzeug bekannt, das in seinem Innenraum von der Fahrerkabine getrennt einen Kofferaufbau besitzt, der auf einem Werktisch Bearbeitungsmaschinen in Form von Instrumenten-Schärfmaschinen aufweist, mit denen an der Bedarfsstelle, nämlich einer Arztpraxis oder Klinik, die dort verwendeten Instrumente geschärft werden können. Das Fahrzeug ist so ausgelegt, daß es Ersatzinstrumente an Bord hat, die der Praxis oder Klinik zur Verfügung gestellt werden, während die praxiseigenen bzw. klinikeigenen Instrumente geschärft bzw. geschliffen werden und für den Einsatz während des Schärfens nicht zur Verfügung stehen. Grundsätzlich werden somit Instrumente ausgetauscht und während des Austausches die klinikeigenen Instrumente geschärft bzw. geschliffen, so daß vermieden werden kann, daß die klinikeigenen Instrumente zum Schärfen an eine Werkstätte transportiert und auf diese Weise Instrumenten-Ausfallzeiten in Kauf genommen werden müssen.

Dichtungen unterschiedlicher Größe und/oder unterschiedlicher Type werden in herkömmlicher Weise in großen Spezialmaschinen auf Vorrat gefertigt, in der Fabrik (oder wahlweise im Groß- und Einzelhandel) gelagert und nach Bedarf von dem Dichtungsverwender geordert. Dies hat den Nachteil, daß bei schadhaften Dichtungen die Beschaffung und der Ersatz einer solchen Dichtung einen erheblichen Aufwand bedeutet, häufig mit Kurier transportiert werden muß und damit der Transport von der Herstelloder Lagerstätte zum Benutzer zeit- und kostenintensiv ist. Die Alternative besteht derzeit darin, daß der Kunde Ersatzdichtungen auf Lager hält, was mit erheblichen Kosten verbunden ist, da jede Dichtungstype auf Vorrat gehalten werden muß, und bei langen Lagerzeiten die Qualität der Dichtungen leiden kann.

Aus WO 98/04434 (Mobile Fabrication Unit) ist ein Verfahren, ein Fahrzeug und die Anwendung einer nach dem Verfahren arbeitenden Maschine zum Herstellen von synthetischen, bahnförmigen Materialien, insbesondere Oberflächenbelägen bekannt. Das Fahrzeug wird in die Nähe der Stelle gefahren, an der der mit der Maschine herzustellende Gegenstand benötigt wird. Die Fertigung erfolgt nach einer Vorlage, die wegen der Größe des herzustellenden Gegenstandes umständlich zu transportieren ist, so daß größere Entfernungen zwischen dem Fahrzeug und der Einbaustelle des Gegenstandes vermieden werden sollen. Hierbei erfolgt eine Anpassung der Herstellmaschine bzw. Herstellanlage an das jeweilige Fahrzeug, das eine erhebliche Größe und umfangreiche technische Einrichtungen, wie Klimaanlage, Bearbeitungsmaschinen großer Abmessung usw. erforderlich macht, die im wesentlichen durch die relativ großen Abmessungen der herzustellenden Gegenstände (in der Größenordnung von bis zu 4 m Länge) bestimmt sind.

Aufgabe der Erfindung ist es demgegenüber, am Ort des Bedarfes Dichtungen oder ähnliche Drehteile individuell und speziell an den jeweiligen Bedarf und zum benötigten Zeitpunkt angepaßt herzustellen, also technische Gegenstände zu produzieren, die während des Betriebes in Maschinen bzw. Anlagen zerstört oder undicht geworden sind und die möglichst sofort durch neue Dichtungen ersetzt werden müssen, um den Zeitraum des Betriebsausfalles der Maschine oder Anlage so gering wie möglich zu halten.

Gemäß der Erfindung wird dies dadurch erreicht, daß eine Dichtungsherstellmaschine den Abmessungen bzw. Gegebenheiten eines mobilen Fahrzeuges angepaßt und auf dem Fahrzeug fest montiert wird, und daß die Maschine per Fahrzeug an die Bedarfsstelle herangefahren sowie an Ort und Stelle die gewünschte Dichtung gefertigt wird. Beispielsweise lassen sich mit der Erfindung schadhaft gewordene Dichtungen sowohl ohne wesentliche Verzögerung an Ort und Stelle innerhalb kürzester Zeit nachfertigen oder während einer Arbeitspause, am Abend, oder zu beliebigen anderen Zeitpunkten orginalgetreu herstellen, so daß der Betrieb der Maschine oder Anlage nicht oder nur über einen sehr kurzen Zeitraum unterbrochen wird. Ein derartiges Fahrzeug ist dabei insbesondere als Werkstattwagen ausgebildet, der alle für die Herstellung der Dichtungen erforderlichen maschinellen Einrichtungen, Werkzeuge und Materialien enthält, und der als fahrbare Dichtungsherstellfabrik betrieben wird.

Das Herstellen, Einbauen, und Testen der Dichtung kann damit an Ort und Stelle erfolgen. Paßt die Dichtung nicht oder wird die Dichtung beim oder nach dem Einbau beschädigt, kann sie nach den Vorgaben praktisch ohne Zeitverlust noch einmal hergestellt werden.

Die derzeit verfügbaren stationären Dichtungsherstellmaschinen werden zum Zweck vorliegender Erfindung in ihren Abmessungen reduziert und auf die Dimensionen eines Werkstattwagens abgestimmt oder im Bedarfsfall für die Installation auf dem Fahrzeug völlig neu konzipiert. Im Prinzip wird auf dem Fahrzeug-Aufbau eine vollständige Werkstätte eingerichtet, die neben der eigentlichen Dichtungsherstellmaschine, z.B. einer CNC-Drehbank, Regale für die Aufnahme der unterschiedlichen Rohlinge für die Dichtungen, die zur Herstellung der Dichtungen benötigten Drehstähle, alle erforderlichen Werkzeuge usw. aufweist. Die Maschine wird ferner so ausgelegt, daß sie sowohl vom Stromnetz als auch über Akku bzw. Generator betrieben werden kann und damit ortsunabhängig ist.

Um einwandfreie Arbeitsbedingungen zu erzielen, wird der Werkraum des Werkstattwagens während der Zeit, zu der Arbeiten durchgeführt werden, aufgebockt, z.B. mittels hydraulisch ausfahrbarer Bodenstützen, so daß verhindert wird, daß Bewegungen, Schwankungen und dergl. des Fahrzeugbodens auf den Werktisch und damit auf das Werkzeug und das zu bearbeitende Werkstück übertragen werden können.

Mit dem erfindungsgemäßen Vorschlag wird erreicht, daß Dichtungen genau zum Bedarfszeitpunkt an Ort und Stelle hergestellt, eingebaut, getestet und bei Störung nach dem Einbau neu und variiert hergestellt werden können, so daß für den Kunden eine optimale Lösung erzielt wird, die ihm eine aufwendige Lagerhaltung erspart. Dabei kann im Bedarfsfall die Dichtung nach Angaben des Kunden auch in abgeänderter und verbesserter Form unmittelbar an Ort und Stelle hergestellt werden. Bei Bedarf bestellt der Kunde beim Betreiber das Dichtungsmobil zu sich. Die Zeit für die Anfahrt wird beim Kunden in der Regel für den Ausbau der schadhaften Dichtung benötigt, so daß Stillstandszeiten praktisch kaum anfallen. Auf diese Weise entfällt beim Kunden jede Lagerhaltung und der damit verbundene Aufwand.

Nachstehend wird die Erfindung in Verbindung mit der Zeichnung anhand eines Ausführungsbeispieles erläutert.
- Fig. 1: zeigt eine Aufsicht auf eine Ausführungsform eines Werkstattwagens nach der Erfindung, in schematischer Darstellung und
- Fig. 2: eine schematische Seitenansicht des Werkstattwagens nach Fig. 1.

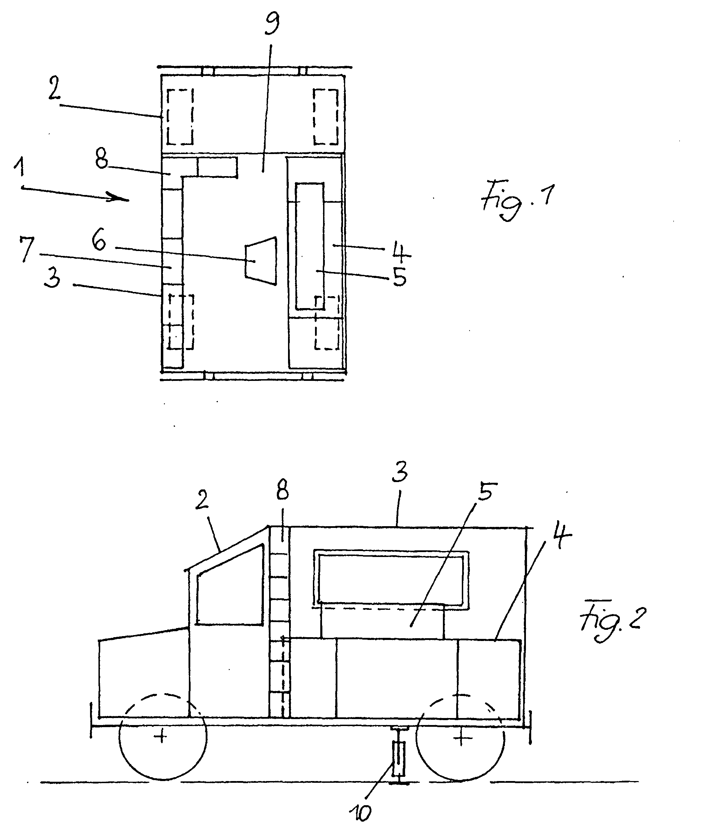

Ein Werkstattwagen 1 mit Fahrerhaus 2 und Kastenaufbau 3, der den Arbeitsraum darstellt, nimmt einen Werktisch 4 mit einer darauf befestigten Spezialdrehbank 5, mit der die Dichtungen oder dergl. Drehteile gedreht werden, auf einer Längsseite des Kastens, der zumindest an dieser Seite ein Fenster enthält, auf. Dem Werktisch 4 zugeordnet ist ein Platz 6 angedeutet, den die Bedienungsperson stehend oder sitzend einnimmt, so daß 6 z.B. eine Sitzgelegenheit sein kann. Auf der gegenüberliegenden Seite des Aufbaues 3 sind Regale 7, und auf der Vorderseite des Aufbaues, dem Fahrerhaus zugeordnet, weitere Regale 8 vorgesehen. Zwischen Fahrerhaus 2 und Aufbau 3 ist ein Durchgang 9 dargestellt. Die Regale 7, 8 an der Seitenwand und der Frontabgrenzung zum Fahrerhaus nehmen das Arbeitsmaterial und die Werkzeuge für den Betrieb der Drehbank auf, sind also im wesentlichen Lagerregale.

Des weiteren ist mit 10 eine vorzugsweise hydraulisch betätigbare Stütze bzw. Aufbockvorrichtung dargestellt, die die Fahrzeugfederung kompensiert und verhindert, daß störende Bewegungen des Fahrzeuges nicht auf den Arbeitstisch und damit auf das Werkzeug, d.h. die Drehbank, übertragen werden, damit eine hohe Präzision der Bearbeitung gewährleistet werden kann.

## Patentansprüche

1. Verfahren zum Bereitstellen von maschinell und individuell hergestellten Dichtungen an der Bedarfsstelle, bei dem eine Dichtungsherstellmaschine (5) den Abmessungen bzw. Gegebenheiten eines handelsüblichen Fahrzeuges, z. B. eines Werkstattwagens (1) angepaßt und auf dem Fahrzeug fest montiert wird, und die Dichtungsherstellmaschine mit dem Fahrzeug an die Bedarfsstelle herangefahren und an Ort und Stelle die gewünschte Dichtung gefertigt, sowie unmittelbar anschließend gegen eine schadhafte Dichtung ausgewechselt wird, wobei die Ausgangsmaterialien für die Herstellung der Dichtungen, die Werkzeuge für die Herstellung der unterschiedlichen Dichtungsgrößen und -typen und alle weiteren für die Herstellung der Dichtungen an Ort und Stelle erforderlichen Werkstatt-Einrichtungen (7, 8) in das Fahrzeug integriert werden.

2. Verfahren nach Anspruch 1, bei dem die Dichtungsherstellmaschine (5) ein in den Fahrzeugaufbau (3) eingebautes, modulares Drehbankzentrum ist, dessen Abmessungen entsprechend an den Fahrzeugaufbau angepaßt ausgelegt und im Vergleich zu entsprechenden, stationären Zentren in den Dimensionen und der konstruktiven Ausgestaltung auf die Erfordernisse des Fahrzeuges reduziert werden.

3. Fahrzeug in Form eines Werkstattwagens (1), dessen Fahrzeug-Aufbau (3) eine Dichtungsherstellmaschine (5) mit auf den Fahrzeug-Betrieb abgestellten Dimensionen und konstruktiven Ausgestaltungen aufnimmt, und der Fahrzeug-Aufbau (3) Regale (7, 8) für die Aufnahme von Werkzeugen, Dichtungsrohmaterial, Werkstatteinrichtungen sowie einen ortsunabhängigen Antrieb für die Dichtungsherstellmaschine aufweist.

4. Fahrzeug nach Anspruch 3, **dadurch gekennzeichnet, daß** die Dichtungsherstellmaschine (5) eine Spezialdrehbank ist.

5. Anwendung einer nach dem Verfahren nach den Ansprüchen 1 und 2 arbeitenden Dichtungsherstellmaschine (5) für das Herstellen und den Austausch einer schadhaft gewordenen Dichtung unmittelbar an der Bedarfsstelle.

## Claims

1. Method of fabricating machine-made and individually manufactured sealing elements or gaskets on the spot comprising fitting a sealing element and gasket fabricating machine (5) to the dimensions and conditions of a conventional vehicle, for example a service vehicle (1) and arranged stationary on said vehicle, driving the sealing element and gasket fabricating machine together with the vehicle to the spot, where a new sealing element or gasket is in demand, fabricating the required seal on the spot, and subsequent thereto replacing a damaged seal, wherein the starting materials for fabricating the sealing elements or gaskets, the tools for fabricating the different sizes and types of sealing elements or gaskets and all required service means and utensils (7, 8) for fabricating the sealing elements or gaskets on the spot are integrated into the vehicle.

2. Method according to claim 1, wherein the sealing and gasket fabricating machine (5) is a modular lathe center built into the vehicle structure (3), the dimensions of which lathe center being designed according to the vehicle structure and compared with corresponding stationary centers are reduced to the requirements of the vehicle so far as it concerns the dimensions and the structures.

3. Vehicle designed as a service vehicle (1) the structure (3) of which comprises a sealing element and gasket fabricating machine (5) the dimensions and structural conditions of which are adapted to the operation of the vehicle, the vehicle structure (3) receiving shelves (7, 8) for the tools, raw materials for the sealing elements and gaskets, service station equipment as well as a mobile drive for the sealing element and gasket fabricating machine.

4. Vehicle according to claim 3, in which the sealing element or gasket fabricating machine (5) is a special lathe machine.

5. The use of a sealing element and gasket fabricating machine operating according to the method of claims 1 - 3 for fabricating a damaged sealing element or gasket on the spot, and replacing a damaged one.

## Revendications

1. Procédé de réalisation, par machine et individuellement, de garnitures d'étanchéité au point d'utilisation, dans lequel une machine de réalisation de garnitures (5) est adaptée aux dimensions ou caractéristiques d'un véhicule habituel dans le commerce, comme un camion-atelier (1) et montée fermement sur ce véhicule, dans lequel la machine de réalisation de garnitures est conduite avec le véhicule jusqu'au point d'utilisation, dans lequel la garniture souhaitée est réalisée sur place puis est remplacée directement après par une garniture nuisible, et enfin, dans laquelle les matériaux de départ pour la réalisation des garnitures, les outils de réalisation des différentes tailles et types de garnitures ainsi que tous les autres dispositifs d'atelier (7,8) nécessaires pour réaliser les garnitures sur place *sont* intégrés dans le véhicule.

2. Procédé selon la revendication 1, dans lequel la machine de réalisation de garnitures (5) est un centre de tour modulaire intégré dans la structure du véhicule (3), dont les dimensions sont conformes à la structure du véhicule et dont les dimensions mais aussi la structure sont, par rapport à d'autres centres stationnaires correspondants, réduites en fonction des besoins du véhicule.

3. Véhicule en forme de camion-atelier (1) dont la structure (3) reçoit une machine de réalisation de garnitures (5) présentant des dimensions et des structures adaptées au fonctionnement du véhicule et dont la structure (3) présente des étagères (7,8) destinées à recevoir des outils, du matériel de tuyaux d'étanchéité, des installations d'atelier ainsi qu'un entraînement pour machine de réalisation de garnitures pouvant être utilisé n'importe où.

4. Véhicule selon la revendication 3, **caractérisé en ce que** la machine de fabrication de garnitures d'étanchéité (5) est un tour spécial.

5. Utilisation d'une machine de fabrication de garnitures d'étanchéité (5) opérant selon le procédé des revendications 1 et 2 pour la fabrication et le remplacement d'une garniture d'étanchéité devenue défectueuse, directement au point où cela s'avère nécessaire.
